(19) Europäisches Patentamt / European Patent Office / Office européen des brevets

(11) **EP 3 533 143 B1**

(12) **EUROPEAN PATENT SPECIFICATION**

(45) Date of publication and mention
of the grant of the patent:
**29.11.2023 Bulletin 2023/48**

(21) Application number: **17784655.7**

(22) Date of filing: **19.10.2017**

(51) International Patent Classification (IPC):
**H02P 21/00** *(2016.01)*   **H02P 21/14** *(2016.01)*
**H02P 6/34** *(2016.01)*

(52) Cooperative Patent Classification (CPC):
**H02P 21/0017; H02P 6/34; H02P 21/141;
H02P 23/14**

(86) International application number:
**PCT/EP2017/076697**

(87) International publication number:
**WO 2018/077718 (03.05.2018 Gazette 2018/18)**

(54) **METHOD AND APPARATUS FOR ADAPTING THE MAGNETIC CHARACTERISTICS OF A SYNCHRONOUS RELUCTANCE MOTOR**

VERFAHREN UND VORRICHTUNG ZUR ANPASSUNG DER MAGNETISCHEN EIGENSCHAFTEN EINES SYNCHRONEN RELUKTANZMOTORS

PROCÉDÉ ET APPAREIL D'ADAPTATION DES CARACTÉRISTIQUES MAGNÉTIQUES D'UN MOTEUR À RÉLUCTANCE SYNCHRONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2016 IT 201600109364**

(43) Date of publication of application:
**04.09.2019 Bulletin 2019/36**

(73) Proprietor: **KSB SE & Co. KGaA
67227 Frankenthal (DE)**

(72) Inventors:
• **DI SANTO, Federico
36040 Sossano (VI) (IT)**
• **MARODIN, Enrico
36021 Barbarano Vicentino (IT)**

(56) References cited:
**EP-A1- 1 641 114     EP-A1- 2 453 248
EP-A1- 2 555 420     US-B2- 7 825 620**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 3 533 143 B1**

**Description**

Field of the invention

The present invention generally finds application to the field of electric machines, and particularly relates to a method of determining the magnetic characteristics of a synchronous reluctance motor and automatically adapting the motor to maximum efficiency conditions.

In a second aspect, the invention relates to an apparatus for implementing the aforementioned method on a synchronous reluctance motor.

Background art

In a reluctance motor, torque is known to be generated by magnetic anisotropy and maximization of this characteristic is known to be one of the main design specifications. Nevertheless, the anisotropic behavior of the machine is highly complex and depends on a great number of factors.

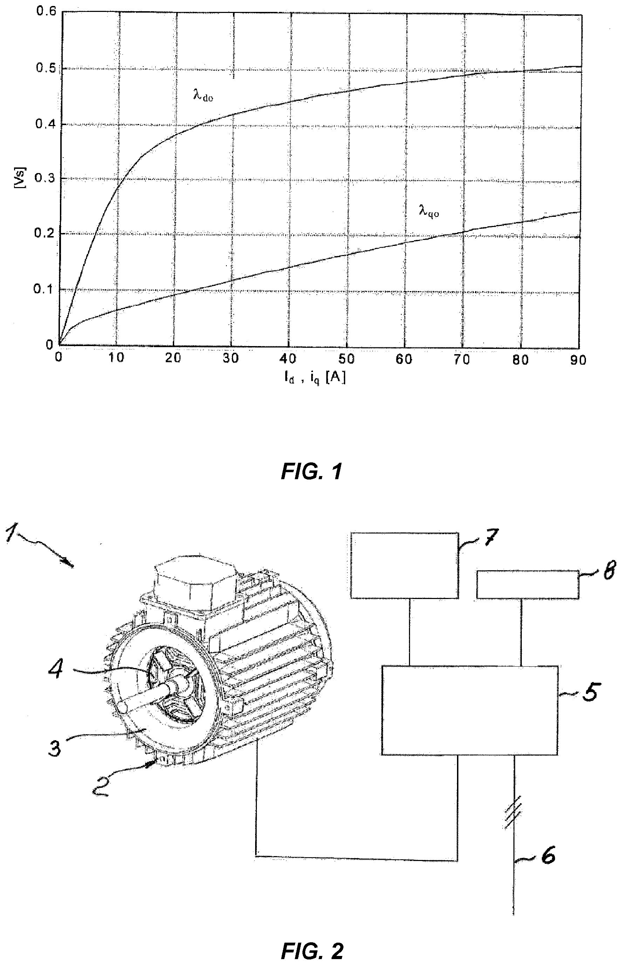

When the magnetomotive force applied to the stator is aligned with the maximum and minimum reluctance axes, the resulting flux characteristics λdo and λqo are those experimentally obtained by bench measurements, as shown in FIG. 1.

Nevertheless, these flux curves do not fully describe the magnetic behavior of the motor. Thus, when both components id and iq are other than zero, additional information is required. Generally, the fluxes λd are λq are functions of both currents, whereas the functions Ado and λqo simply represent two particular cases of the general functions

$$\lambda d = \lambda d\ (i_d,\ i_q)$$

$$\lambda q = \lambda q\ (i_d,\ i_q)$$

where λdo=λd(id,0) and λqo=λq(0, iq)

Methods are known for laboratory measurement of the magnetic characteristics of a synchronous reluctance motor. These methods usually require a test system, which comprises a constant-speed run motor for driving the motor to be tested, whereas current steps are applied to the motor to be tested, which generate electromotive forces (EMF) that can be measured using appropriate measurement instruments.

One method for laboratory measurement of the magnetic characteristics of a synchronous reluctance motor is known, for instance, from IT-A-1354129.

The main drawback of this known method is that a laboratory and the equipment for carrying out bench tests on the motor are not always available.

Furthermore, a very large number of current steps may be required to be applied to the run motor for the flux characteristics to be mapped with an appropriate accuracy, and this will considerably increase the costs of the test, which will lead to a dramatic increase of motor costs.

US2015/0226776 discloses a method of measuring the inductance of synchronous permanent-magnet motors, including the steps of applying a test voltage to the stator, measuring the response current in the stator while the motor is still, and determining the differential value of the response current using a digital filter.

EP2555420 discloses a method for estimating inductances of an electric motor by injecting a current into the stator and the rotor and the subsequent calculation of the components of the current along the minimum and maximum magnetic reluctance axes.

EP1641114 discloses a method for determining the magnetic flux functions of a synchronous reluctance motor by varying the supply current to the stator while the rotor is moving at a controlled rotational speed. EP2453248 discloses a method for determining the inductances of a synchronous reluctance motor by applying a voltage to the stator and to the rotor and the subsequent calculation of the components of the voltage along the minimum and maximum magnetic reluctance axes.

US7825620 discloses an apparatus for determining the inductances of an alternating voltage electric motor by superimposing an alternating current to a continuous current variable in a continuous or discontinuous way by means of an inverter.

However, none of these known methods and apparatus take into account the anisotropy of the electric motor for adaptation of the magnetic characteristics thereof.

No method is known in the art for adapting the magnetic characteristics of a synchronous reluctance motor without using bench tests.

2

Technical Problem

In view of the prior art, the technical problem addressed by the present invention is deemed to consist in allowing adaptation of the magnetic characteristics of a synchronous reluctance motor without carrying out laboratory tests and in minimizing the number of characteristics to be determined while maintaining the same order of accuracy as would be obtained by experimental testing.

Disclosure of the invention

A general object of the present invention is to solve the aforementioned technical problem and obviate the above drawbacks, by providing a method of adapting the magnetic characteristics of a synchronous reluctance motor that is highly efficient and relatively cost-effective.

A particular object is to provide a method as defined above, that allows the characteristics of the motor to be mapped without requiring expensive laboratory testing.

A further object is to reduce the number of measurements of physical quantities taken by the system to reduce the complexity and costs of the method.

Yet another object is to ensure fully automated adaptation of the magnetic characteristics of the motor using the inverter and the electronic motor-control system.

These and other objects, as better explained hereafter, are fulfilled by a method of automatically adapting the magnetic characteristics of a synchronous reluctance motor as defined in claim 1.

According to another aspect, the invention provides an apparatus for carrying out the aforementioned method defined in the independent claim 7.

Advantageous embodiments of the invention are defined in accordance with the dependent claims.

Brief description of the drawings

Further features and advantages of the invention will be more apparent from the detailed description of one preferred but non-exclusive embodiment of a method and an apparatus for adapting the magnetic characteristics of a synchronous reluctance motor according to the invention, which are described as a non-limiting example with the help of the annexed drawings, in which:

FIG. 1 shows the flux curves of a motor as experimentally measured in a laboratory according to the prior art.
FIG. 2 schematically shows an apparatus for adapting the magnetic characteristics of a synchronous reluctance motor of the invention;
FIG. 3 is a sectional view of the synchronous reluctance motor, with the axes of maximum and minimum reluctance being schematically arranged;
FIG. 4 is a functional diagram of the apparatus of FIG. 2;
FIG. 5 shows a flow chart of the inventive method;

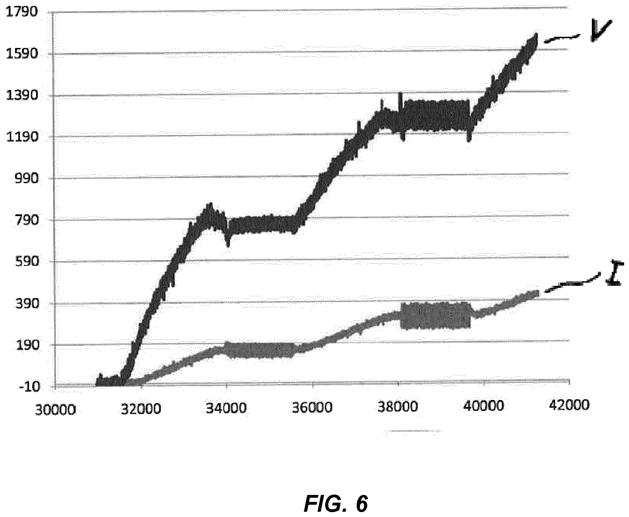

FIG. 6 partially shows the current and voltage curves as experimentally measured;

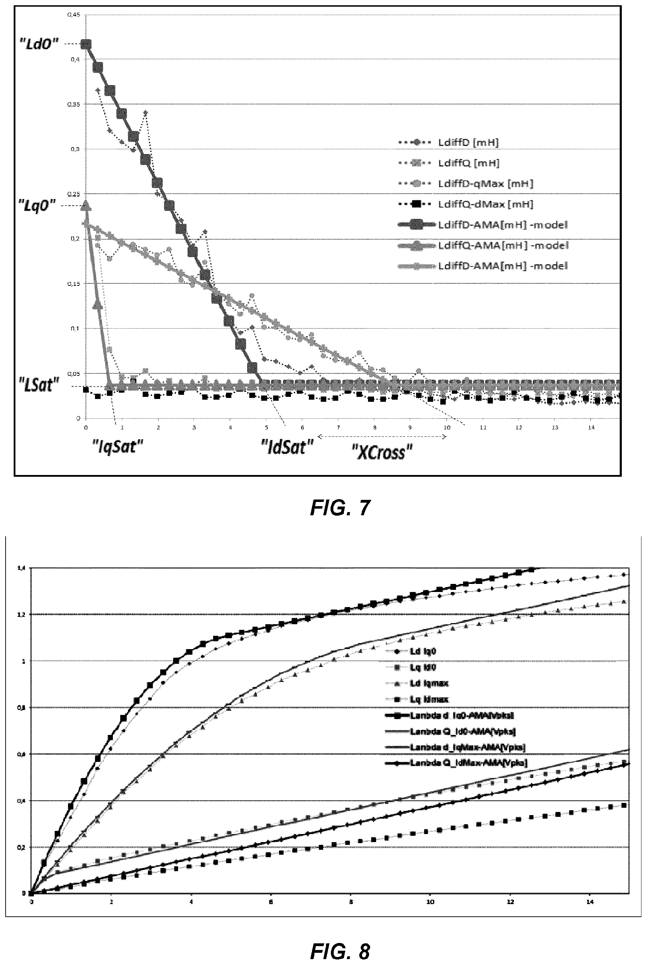

FIG. 7 shows the diagrams of differential inductances detected with the inventive method, as compared with the corresponding diagrams that can be deduced from experimental testing;
FIG. 8 shows the flux curves as determined from the diagrams of differential inductances as shown in FIG. 6, also as compared with the corresponding flux curves deduced from experimental testing.

Detailed description of a preferred exemplary embodiment

The aforementioned figures show an apparatus for adapting the magnetic characteristics of a synchronous reluctance motor of the invention, designated by numeral **1.**

Particularly, the apparatus **1** comprises a synchronous reluctance motor **2** having a stator, or a stationary portion **3,** with a rotor **4** housed therein.

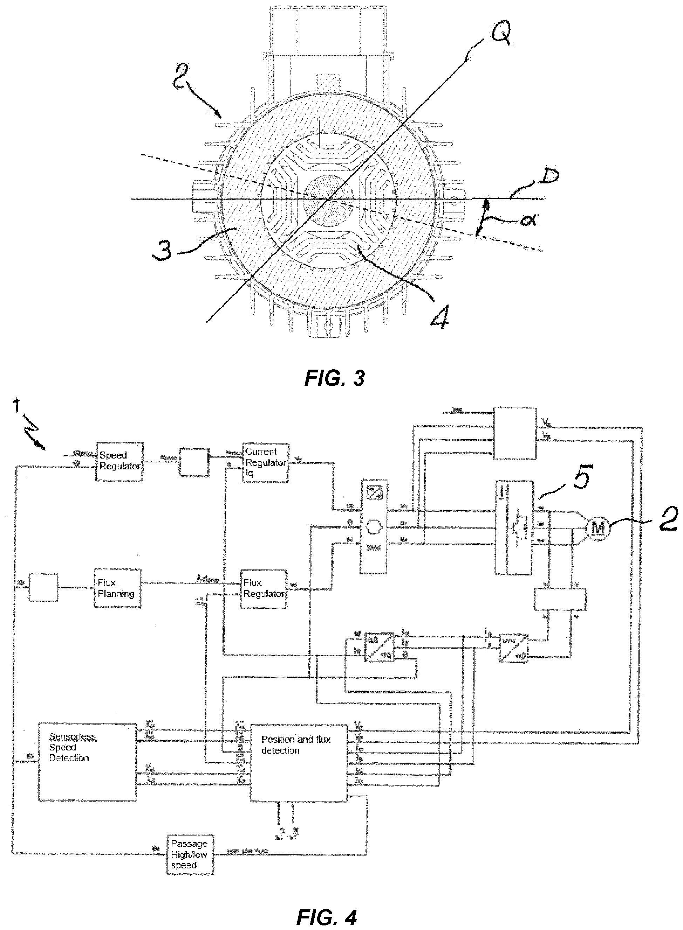

The motor **2** has at least one pair of axes **D, Q** of minimum magnetic reluctance and maximum magnetic reluctance respectively, as shown in **FIG. 3** and a control unit **5** for controlling the power supply to the motor **2,** preferably an inverter, which is connected to a three-phase supply network **6,** with appropriate digital interfaces possibly associated therewith, such as a display **7** and a keypad **8** or a computer, not shown.

The motor **2** has rated current **I** and rated voltage **V** values that are set during design and can be experimentally verified on the bench. The supply current **I** has components **id, iq** along the axes of minimum **D** and maximum reluctance **Q.**

Generally, the method comprises the steps of applying a predetermined number **m, n** of voltage and current variations $\Delta$**V,** $\Delta$**I** to the stator **3** with a predetermined frequency **f,** determining differential inductances (**Ldiff**) in response to voltage and current variations $\Delta V$, $\Delta I$, calculating the flux curves $\lambda d$, $\lambda q$ of the motor by integrating the differential inductances **Ldiff** and mapping the flux curves $\lambda d$, $\lambda q$ in the control unit **5** for automatically adapting the magnetic characteristics of the motor **2** with substantially the same accuracy as that of an experimental test.

Conveniently, the predetermined number **m, n** of voltage and current variations $\Delta V$, $\Delta I$ may be kept to a relatively low level as compared with the measurements that are experimentally taken on the bench, for the method to be quicker and more cost-effective.

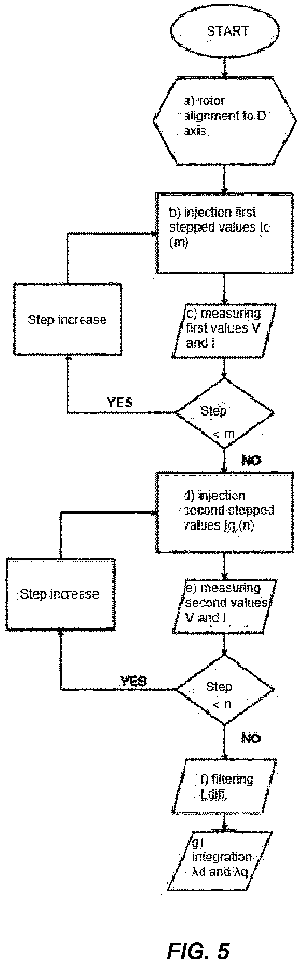

Particularly, as shown in **FIG. 5**, a step **a)** is initially provided, in which the rotor **4** is aligned with the axis **D** of minimum reluctance.

Such alignment may be achieved by either of the following modes:

> **a')** applying a current pulse of predetermined magnitude to the stator **3**, such magnitude being about equal to the rated current **I**, to cause the rotor **4** to rotate through a predetermined angle $\alpha$ to a stationary position in which it is aligned with the axis **D** of minimum reluctance, or
>
> **a")** identifying the angular position $\alpha$ after voltage or current injection, and using such position $\alpha$ as a landmark for later processing in the axes **D** and **Q,** while avoiding the rotation of the rotor **4.**

The step **a** in which the rotor **4** is angularly aligned is followed by a step **b** in which a first number **m** of first current variations $\Delta I_d$ are injected along the axis of minimum reluctance **D**, each having a value of about $I_{dmax}/m$.

The first current variations $\Delta I_d$ have stepwise increasing average values, with a first maximum value $I_{dmax}$ above the rated current **I** to cause saturation of the stator along the axis **D** of minimum reluctance, while maintaining a zero current component **iq** along the axis **Q** of maximum reluctance.

As an example the aforementioned first maximum current value **Idmax** is about 150% the rated current **I**.

The current injection step **b** corresponds to a step **c** of measuring the voltage **Vd** and the current **Id** along the axis of minimum reluctance **D** in response to stepwise increasing current values $I_{dmax}/m$ to obtain first detected magnitudes **Vd1, Id1.**

In principle, a voltage variation (**dV**) applied to the motor at a given current (**I**) and at a frequency (**f**), will lead to a variation (**dI**) and an average value (**V**) that will allow the differential inductance to be calculated with the function:

$$\mathrm{Ldiff}\ (I) = \frac{dV - (dI * V/I)}{2 * \mathrm{pi} * f * dI}$$

A second injection step **d** follows, in which a second number **n** of current variations $\Delta Iq$ are injected, with second current values **Iqmax/n,** along the axis of maximum reluctance **Q,** where the current variations $\Delta Iq$ have stepwise increasing average values with a second predetermined maximum value **Iqmax** smaller than the rated current **I** to maintain the rotor **4** in the initial stationary alignment position, and maintain a zero current component id along the axis of minimum reluctance **D.**

As an example the aforementioned second maximum current value **Iqmax** is about 15% the rated current **I**.

Then, a second measuring step e follows, in which the voltage **Vq** and the current **Iq** are measured along the axis of maximum reluctance Q in response to the second stepwise increasing current variation values **Iqmax/n** injected in step d to obtain second detected magnitudes **Vq2, Iq2.**

The first **Vd1, Id1** and second **Vq2, Iq2** detected magnitudes undergo a processing step f which is designed to determine appropriate motor-specific parameters **Ld0, IdSat, Lq0, IqSat, LSat, XCross**.

Now, the method includes a step g in which the differential values Ldiff are determined from the specific parameters **Ld0, IdSat,** Lq0 **IqSat, LSat, XCross** whose meaning is explained below.

Ld0 represents the differential inductance along the axis **D** with the ideal value **Id** being 0.

**IdSat** represents the current that ideally corresponds to a zero differential inductance along the axis **D.**

**Lq0** represents the differential inductance along the axis **Q** with the ideal value **Iq** being 0.

**IqSat** represents the current that ideally corresponds to a zero differential inductance along the axis **Q.**

**LSat** represents the differential inductance at saturation, along the axes **D** and **Q.**

**XCross** represents the percent values that accounts for the crossed saturation factor.

The derivative of **Ldiffd** is calculated to detect the change of the characteristic slope. Then the trend line is plotted in the first linear section, as a first-order equation

$$y = mx + q$$

resulting in:

$$Ld = q \quad IdSat = -\frac{q}{m}$$

The above discussed procedure is repeated with **Ldiffq.**

**LqSat** may be deemed to be equal to **LdSat.**

**LSat** is determined from the saturation value equal to the Ldiffd value obtained at the maximum current injection point.

**XCross** defines how anisotropy affects the differential inductance along the axis **D.**

This parameter may be approximated as:

$$XCross = \frac{Lq0 - Lsat}{Ld0}$$

and is saturated to the limit value

$$XCross(max) = \frac{Lq0 - Ld0}{Ld0}$$

The aforementioned differential inductance values are obtained using the following functions [1], [2], [3] and [4]:

$$\left\{ \begin{array}{l} Ldiff_d(i_d,0) = -\dfrac{Ld0}{Idsat} * i_d + Ld0 \\ \\ \text{if } Ldiff_d(i_d,0) < Lsat \text{ then } Ldiff_d(i_d,0) = Lsat \end{array} \right\} \quad [1]$$

$$\left\{ \begin{array}{l} Ldiff_d(i_d, i_{qmax}) = -\dfrac{Ld0}{Idsat} * \dfrac{(Ld0 - Ld0 * XCross)}{Ld0} * i_d + (Ld0 - Ld0 * XCross) \\ \\ \text{if } Ldiff_d(i_d, i_{qmax}) < Lsat \text{ then } Ldiff_d(i_d, i_{qmax}) = Lsat \end{array} \right\} \quad [2]$$

$$\left\{ Ldiff_q(0, i_q) = -\dfrac{Lq0}{Iqsat} * i_q + Lq0 \right\} \quad [3]$$

$$\text{if } Ldiff_q(i_q,0) < Lsat \text{ then } Ldiff_q(i_q,0) = Lsat$$

$$\left\{ Ldiff_q(i_{dmax}, i_q) = Lsat \right\} \quad [4]$$

The use of differential inductances affords linearization of characteristics, which will afford limitation of the specific parameters to small number, for example and without limitation 6.

Steps **a** to **g** are controlled by an appropriate algorithm, which is initialized in the inverter **5** to process the differential inductances $L_{diff}$ and map flux curves $\lambda$**d,** $\lambda$**q** of the motor **2** with an accuracy close to that obtained on bench tests.

Finally, the maps of flux curves $\lambda$d, $\lambda$q are used in the algorithm for automatic adaption of the magnetic characteristics of the motor **2.**

The maps obtainer by the invention have such an accuracy as to afford sensorless motor control, although the method also applies to motor control using sensors.

The method requires no further hardware, in addition to the inverter that is typically associated with the motor.

While the method and apparatus have been described with particular reference to the accompanying figures, the numerals are only used for the sake of a better intelligibility of the invention and shall not be intended to limit the claimed scope in any manner.

Industrial applicability

The present invention may find application in industry, because it can be produced on an industrial scale in factories for manufacturing drives for three-phase synchronous reluctance motors.

**Claims**

1. A method of automatically adapting the magnetic characteristics of a synchronous reluctance motor (**2**), of the type that comprises a stator (**3**) housing a rotor (**4**) therein and defining at least one pair of axes respectively of minimum (**D**) and of maximum (**Q**) magnetic reluctance, a control unit (**5**) for controlling the electrical feeding of the motor, wherein the motor (**2**) has predetermined rated current (**I**) and rated voltage (**V**) values obtained on the bench and wherein the supply current has components ($i_d$, $i_q$) along the axes of minimum and maximum reluctance (**D, Q**), which method comprises the steps of applying a predetermined number (**m, n**) of voltage and current variations ($\Delta \mathbf{V}, \Delta \mathbf{I}$) to the stator with a predetermined frequency (**f**), determining differential inductances ($\mathbf{L_{diff}}$) in response to said voltage and current variations ($\Delta \mathbf{V}, \Delta \mathbf{I}$), calculating the motor flux curves ($\lambda_d$, $\lambda_q$) by integrating said differential inductances ($\mathbf{L_{diff}}$) and mapping said flux curves ($\lambda_d$, $\lambda_q$) in said control unit (**5**) **characterized by comprising** the following steps:

    a first detection step (**a**) of detecting the angular rotor position ($\alpha$) relative to the minimum reluctance axis (**D**) for establishing a stationary position of alignment to said axis (**D**);

    a first injection step (**b**) to inject in the stator a first number (**m**) of current variations ($\Delta \mathbf{I_d}$) along said minimum reluctance axis (**D**) with first values ($\mathbf{I_{dmax}/m}$), said variations having stepwise increasing average values with a first maximum value ($\mathbf{I_{dmax}}$) higher than the nominal current (**I**) to provide saturation of the stator along said minimum reluctance axis (**D**) while keeping the current component ($i_q$) along the maximum reluctance axis (**Q**) equal to zero;

    a first measuring step (**c**) of measuring the voltage ($\mathbf{V_d}$) and current ($\mathbf{I_d}$) along the minimum reluctance axis (**D**) with values increasing by steps ($\mathbf{I_{dmax}/m}$) to obtain first measured values ($\mathbf{V_{d1}, I_{d1}}$) for each first number (m) of current variations ($\Delta \mathbf{I_d}$);

    a second injection step (**d**) for injecting a second number (**n**) of current variations ($\Delta \mathbf{I_q}$) with second predetermined current values ($\mathbf{I_{qmax}/n}$) along said maximum reluctance axis (**Q**), said variations having stepwise increasing average values with a second predetermined maximum current value ($\mathbf{I_{qmax}}$) lower than the nominal current (**I**) to keep the rotor (**4**) in said stationary alignment position and the current component ($i_d$) along the minimum reluctance axis (**D**) equal to zero;

    a second measuring step (**e**) of measuring voltage ($\mathbf{V_q}$) and current ($\mathbf{I_q}$) along the maximum reluctance axis (**Q**) in response to said second increasing stepwise current variations ($\Delta \mathbf{I_q}$) injected in the second injection step (**d**) to obtain second measured values ($\mathbf{V_{q2}, I_{q2}}$);

    a calculation step (**f**) of computing said first ($\mathbf{V_{d1}, I_{d1}}$) and said second ($\mathbf{V_{q2}, I_{q2}}$) measured values to determine appropriate specific motor parameters ($\mathbf{L_{d0}, I_{dSat}, L_{q0}, I_{qSat}, L_{Sat}, X_{Cross}}$), wherein said specific motor parameters ($\mathbf{L_{d0}, I_{dSat}, L_{q0}, I_{qSat}, L_{Sat}, X_{Cross}}$) are respectively the first specific differential inductance ($\mathbf{L_{d0}}$) along the minimum reluctance axis (**D**) with the first ideal current value ($\mathbf{I_d}$) along the minimum reluctance axis (**D**) equal to zero, the current at saturation (IdSat) along the minimum reluctance axis (D) corresponding to the first ideal differential inductance value ($\mathbf{L_d}$) along the minimum reluctance axis (**D**) equal to zero, the second specific differential inductance ($\mathbf{L_{q0}}$) along the maximum reluctance axis (**Q**) with the second ideal current value ($\mathbf{I_q}$) along the maximum reluctance axis (**Q**) equal to zero, the current at saturation ($\mathbf{I_{qsat}}$) along the maximum reluctance axis (**Q**) corresponding to the second ideal differential inductance ($\mathbf{L_q}$) along the maximum reluctance axis (**Q**) equal to zero, the ($\mathbf{L_{Sat}}$) differential inductance at saturation along the axes of minimum (**D**) and maximum reluctance (**Q**), and the crossed saturation factor ($\mathbf{X_{Cross}}$) being calculated using the following equation: $\mathbf{X_{Cross}} = (\mathbf{L_{q0} - L_{Sat} / L_{d0}})$;

    a determination step (**g**) of determining said differential inductances ($\mathbf{L_{diff}}$) starting from said specific motor parameters ($\mathbf{L_{d0}, I_{dSat}, L_{q0}, I_{qSat}, L_{Sat}, X_{Cross}}$) according to the following functions [1], [2], [3] and [4] indicated

below:

$$\left\{ \begin{array}{l} Ldiff_d(i_d,0) = -\dfrac{Ld0}{Idsat}*i_d + Ld0 \\ \text{if } Ldiff_d(i_d,0) < \text{Lsat then } Ldiff_d(i_d,0) = \text{Lsat} \end{array} \right\} \qquad [1]$$

$$\left\{ \begin{array}{l} Ldiff_d(i_d, i_{qmax}) = -\dfrac{Ld0}{Idsat} * \dfrac{(Ld0 - Ld0 * XCross)}{Ld0} * i_d + (Ld0 - Ld0 * XCross) \\ \text{if } Ldiff_d(i_d, i_{qmax}) < \text{Lsat then } Ldiff_d(i_d, i_{qmax}) = \text{Lsat} \end{array} \right\} \; [2]$$

$$\left\{ \begin{array}{l} Ldiff_q(0,i_q) = -\dfrac{Lq0}{Iqsat}*i_q + Lq0 \\ \text{if } Ldiff_q(i_q,0) < \text{Lsat then } Ldiff_q(i_q,0) = \text{Lsat} \end{array} \right\} \qquad [3]$$

$$\left\{ Ldiff_q(i_{dmax},i_q) = Lsat \right\} \qquad [4]$$

2. Method as claimed in claim 1, **characterized in that** said first step (**a**) is carried out by applying to the stator (**3**) a current impulse of predetermined value equal to about the nominal current (**I**) to promote rotation of the rotor by a predetermined angle ($\alpha$) and obtain the alignment of the rotor (**4**) to the minimum reluctance axis (**D**).

3. Method as claimed in claim 1, **characterized in that** said first step (**a**) is obtained by identification of the angular position ($\alpha$) of the rotor (**4**) relative to said minimum reluctance axis (**D**) by voltage or current injection and use of such position ($\alpha$) as reference for the further calculation along axes (**D , Q**) in absence of rotation of the rotor (**4**).

4. Method as claimed in claim 1, **characterized in that** said first maximum current value ($I_{dmax}$) is equal to about 150% of the nominal current (**I**).

5. Method as claimed in claim 1, **characterized in that** said second maximum current value ($I_{qmax}$) is equal to about 15% of the nominal current (**I**).

6. Method as claimed in claim 1, **characterized in that** said steps **a**) to **g**) are controller by an algorithm that is initialized in said control unit (**5**) to compute said differential inductances ($L_{diff}$) and map said flux curves ($\lambda$**d**, $\lambda$**q**) of the motor (**2**) with an accuracy comparable with that can obtainable with experimental tests.

7. An apparatus (**1**) for automatically adapting the magnetic characteristics of a synchronous reluctance motor (**2**), comprising a stator (**3**) housing internally thereof a rotor (**4**) and defining at least one pair of axes (**D, Q**) of minimum and maximum magnetic reluctance, feeding means for electrical feeding the motor, wherein the nominal current (**I**) and the nominal voltage (**V**) are label data previously measured by experimental bench test, **characterized by** comprising:

   - an electric impulse applicator configured to provide rotation of the rotor (**4**) by a predetermined angle ($\alpha$) and alignment thereof to the minimum reluctance axis (**D**);
   - an electronic injector configured to apply to the stator (**3**) a predetermined minimum number of voltage and current variations ($\Delta$**V**, $\Delta$**I**) with a predetermined frequency (**f**);
   - a voltage and current measuring device for determining the stator differential inductances ($L_{diff}$) in response to said voltage and current variations ($\Delta$**V**, $\Delta$**I**) with a predetermined frequency (**f**);
   - filter means for determining the differential inductances ($L_{diff}$) in response to said voltage and current variations ($\Delta$**V**, $\Delta$**I**) and as a function of the crossed saturation factor ($X_{Cross}$);

- a control unit (**5**) configured to compute the motor flux curves ($\lambda_d$, $\lambda_q$) of the motor (**2**) by integration of said differential inductances (**L$_{diff}$**) and map said flux curves ($\lambda_d$, $\lambda_q$) to automatically adapt the magnetic characteristics of the motor (**2**);

wherein said control unit (**5**) is configured to carry out the method as defined in claim 1.

## Patentansprüche

1.  Verfahren zum automatischen Anpassen der magnetischen Eigenschaften eines Synchronreluktanzmotors (2) des Typs, der einen Stator (3), in dem sich eine Rotor (4) befindet und der mindestens ein Paar Achsen einer kleinsten (D) bzw. einer größten (Q) magnetischen Reluktanz definiert, eine Steuereinheit (5) zum Steuern der elektrischen Speisung des Motors umfasst, wobei der Motor (2) vorbestimmte Bemessungsstrom(I)- und Bemessungsspannungs(V)-Werte aufweist, die auf der Prüfbank erhalten wurden, und wobei der Versorgungsstrom entlang den Achsen der kleinsten und größten Reluktanz (D, Q) Komponenten ($i_d$, $i_q$) aufweist, wobei das Verfahren die Schritte des Anwendens einer vorbestimmten Anzahl (m, n) von Spannungs- und Stromschwankungen ($\Delta V$, $\Delta I$) mit einer vorbestimmten Frequenz (f) auf den Stator, des Bestimmens von differenziellen Induktanzen ($L_{diff}$) in Reaktion auf die Spannungs- und Stromschwankungen ($\Delta V$, $\Delta I$), des Berechnens der Motorflusskurven ($\lambda_d$, $\lambda_q$) durch Integrieren der differenziellen Induktanzen ($L_{diff}$) und Zuordnen der Flusskurven ($\lambda_d$, $\lambda_q$) in der Steuereinheit (5) umfasst, **dadurch gekennzeichnet, dass** es die folgenden Schritte umfasst:

    einen ersten Detektionsschritt (a) zum Detektieren der Rotorwinkelposition ($\alpha$) relativ zur Achse (D) der kleinsten Reluktanz zum Festlegen einer stationären Position der Ausrichtung auf die Achse (D);
    einen ersten Injektionsschritt (b) zum Injizieren einer ersten Anzahl (m) von Stromschwankungen ($\Delta I_d$) mit ersten Werten ($I_{dmax}$/m) entlang der Achse (D) der kleinsten Reluktanz, wobei die Schwankungen sich schrittweise erhöhende Durchschnittswerte aufweisen, wobei ein erster Höchstwert ($I_{dmax}$) höher ist als der Nennstrom (I), um dem Stator entlang der Achse (D) der kleinsten Reluktanz eine Sättigung bereitzustellen, während die Stromkomponente ($i_q$) entlang der Achse (Q) der größten Reluktanz gleich null ist;
    einen ersten Messschritt (c) zum Messen der Spannung ($V_d$) und des Stroms ($I_d$) entlang der Achse (D) der kleinsten Reluktanz, wobei sich Werte in Schritten ($I_{dmax}$/m) erhöhen, um für jede erste Anzahl (m) von Stromschwankungen ($\Delta I_d$) erste gemessene Werte ($V_{d1}$, $I_{d1}$) zu erhalten;
    einen zweiten Injektionsschritt (d) zum Injizieren einer zweiten Anzahl (n) von Stromschwankungen ($\Delta I_q$) mit zweiten vorbestimmten Stromwerten ($I_{qmax}$/n) entlang der Achse (Q) der größten Reluktanz, wobei die Schwankungen sich schrittweise erhöhende Durchschnittswerte aufweisen, wobei ein zweiter vorbestimmter maximaler Stromwert ($I_{qmax}$) niedriger ist als der Nennstrom (I), um den Rotor (4) in der stationären Ausrichtungsposition und die Stromkomponente ($I_d$) entlang der Achse (D) der kleinsten Reluktanz gleich null zu halten;
    einen zweiten Messschritt (e) zum Messen von Spannung ($V_q$) und Strom ($I_q$) entlang der Achse (Q) der maximalen Reluktanz in Reaktion auf das zweite schrittweise Erhöhen von Stromschwankungen ($\Delta I_q$), die im zweiten Injektionsschritt (d) injiziert wurden, um zwiete Messwerte ($V_{q2}$, $I_{q2}$) zu erhalten;
    einen Berechnungsschritt (f) zum Errechnen des ersten ($V_{d1}$, $I_{d1}$) und des zweiten ($V_{q2}$, $I_{q2}$) gemessenen Wertes, um geeignete spezifische Motorparameter ($L_{d0}$, $I_{dSat}$, $L_{q0}$, $I_{qSat}$, $L_{Sat}$, $X_{Cross}$) zu bestimmen, wobei die spezifischen Motorparameter ($L_{d0}$, $I_{dSat}$, $L_{q0}$, $I_{qSat}$, $L_{Sat}$, $X_{Cross}$) die erste spezifische differenzielle Induktanz ($L_{d0}$) entlang der Achse (D) der kleinsten Reluktanz, wobei der erste ideale Stromwert ($I_d$) entlang der Achse (D) der kleinsten Reluktanz gleich null ist, der Strom bei Sättigung ($I_{dSat}$) entlang der Achse (D) der kleinsten Reluktanz, der dem ersten idealen differenziellen Induktanzwert ($L_d$) entspricht, entlang der Achse (D) der kleinsten Reluktanz gleich null, die zweite spezifische differenzielle Induktanz ($L_{q0}$) entlang der Achse (Q) der größten Reluktanz, wobei der zweite ideale Stromwert ($I_q$) entlang der Achse (Q) der größten Reluktanz gleich null ist, der Strom bei Sättigung ($I_{qSat}$) entlang der Achse (Q) der größten Reluktanz, der der zweiten idealen differenziellen Induktanz ($L_q$) entspricht, entlang der Achse (Q) der größten Reluktanz gleich null, die differenzielle Induktanz bei Sättigung ($L_{Sat}$) entlang der Achse der kleinsten (D) und der größten Reluktanz (Q) bzw. der Kreuzsättigungsfaktor ($X_{Cross}$) ist, der unter Verwendung der folgenden Gleichung berechnet wird: $X_{Cross} = (L_{q0} - L_{Sat}/L_{d0})$;
    einen Bestimmungsschritt (g) zum Bestimmen der differenziellen Induktanzen ($L_{diff}$) beginnend bei den spezifischen Motorparametern ($L_{d0}$, $I_{dSat}$, $L_{q0}$, $I_{qSat}$, $L_{Sat}$, $X_{Cross}$) gemäß den folgenden unten angegebenen Funktionen [1], [2], [3] und [4]:

$$\left\{ \begin{array}{l} Ldiff_d(i_d,0) = -\dfrac{Ld0}{Idsat} * i_d + Ld0 \\[3mm] \text{wenn } Ldiff_d(i_d,0) < \text{Lsat dann } Ldiff_d(i_d,0) = \text{Lsat} \end{array} \right\} \qquad [1]$$

$$\left\{ \begin{array}{l} Ldiff_d(i_d,i_{qmax}) = -\dfrac{Ld0}{Idsat} * \dfrac{(Ld0 - Ld0 * XCross)}{Ld0} * i_d + (Ld0 - Ld0 * XCross) \\[3mm] \text{wenn } Ldiff_d(i_d,i_{qmax}) < \text{Lsat dann } Ldiff_d(i_d,i_{qmax}) = \text{Lsat} \end{array} \right\} \qquad [2]$$

$$\left\{ \begin{array}{l} Ldiff_q(0,i_q) = -\dfrac{Lq0}{Iqsat} * i_q + Lq0 \\[3mm] \text{wenn } Ldiff_q(i_q,0) < \text{Lsat dann } Ldiff_q(i_q,0) = \text{Lsat} \end{array} \right\} \qquad [3]$$

$$\left\{ Ldiff_q(i_{dmax},i_q) = Lsat \right\} \qquad [4]$$

2. Verfahren nach Anspruch 1, **dadurch gekennzeichnet, dass** der erste Schritt (a) durch Anlegen eines Stromimpulses eines vorbestimmten Wertes, der etwa mit dem Nennstrom (I) gleich ist, an den Stator (3) durchgeführt wird, um eine Drehung des Rotors um einen vorbestimmten Winkel ($\alpha$) zu fördern und die Ausrichtung des Rotors (4) auf die Achse (D) der kleinsten Reluktanz zu erhalten.

3. Verfahren nach Anspruch 1, **dadurch gekennzeichnet, dass** der erste Schritt (a) durch Identifizieren der Winkelposition ($\alpha$) des Rotors (4) relativ zur Achse (D) der kleinsten Reluktanz durch Injizieren von Spannung oder Strom und Verwenden dieser Position ($\alpha$) als Referenz für die weitere Berechnung entlang den Achsen (D, Q) bei fehlender Drehung des Rotors (4) erhalten wird.

4. Verfahren nach Anspruch 1, **dadurch gekennzeichnet, dass** der erste maximale Stromwert ($I_{dmax}$) etwa 150 % des Nennstroms (I) beträgt.

5. Verfahren nach Anspruch 1, **dadurch gekennzeichnet, dass** der zweite maximale Stromwert ($I_{qmax}$) etwa 15 % des Nennstroms (I) beträgt.

6. Verfahren nach Anspruch 1, **dadurch gekennzeichnet, dass** die Schritte a) bis g) von einem Algorithmus gesteuert wird, der in der Steuereinheit (5) initialisiert wird, um die differenziellen Induktanzen ($L_{diff}$) zu errechnen und die Flusskurven ($\lambda$d, $\lambda$q) des Motors (2) mit einer Genauigkeit zuzuordnen, die mit der vergleichbar ist, die bei experimentellen Tests erhalten werden kann.

7. Einrichtung (1) zum automatischen Anpassen der magnetischen Eigenschaften eines Synchronreluktanzmotors (2), der einen Stator (3), in dem sich ein Rotor (4) befindet und der mindestens ein Paar Achsen (D, Q) einer kleinsten und einer größten magnetischen Reluktanz definiert, Speisemittel zum elektrischen Speisen des Motors umfasst, wobei der Nennstrom (I) und die Nennspannung (V) Etikettdaten sind, die zuvor bei einem experimentellen Prüfbanktest gemessen wurden, **dadurch gekennzeichnet, dass** sie Folgendes umfasst:

   - einen elektrischen Impulsanleger, der dazu ausgelegt ist, eine Drehung des Rotors (4) um einen vorbestimmten Winkel ($\alpha$) und eine Ausrichtung davon auf die Achse (D) der kleinsten Reluktanz bereitzustellen;
   - einen elektronischen Injektor, der dazu ausgelegt ist, eine vorbestimmte kleinste Anzahl von Spannungs- und Stromschwankungen ($\Delta$V, $\Delta$I) mit einer vorbestimmten Frequenz (f) an den Stator (3) anzulegen;
   - eine Spannungs- und Strommessvorrichtung zum Bestimmen der differenziellen Induktanzen ($L_{diff}$) des Stators in Reaktion auf die Spannungs- und Stromschwankungen ($\Delta$V, $\Delta$I) mit einer vorbestimmten Frequenz (f);
   - Filtermittel zum Bestimmen der differenziellen Induktanzen ($L_{diff}$) in Reaktion auf die Spannungs- und Stromschwankungen (ΔV, ΔI) und in Abhängigkeit vom Kreuzsättigungsfaktor ($X_{Cross}$);
- eine Steuereinheit (5), die dazu ausgelegt ist, die Motorflusskurven ($\lambda_d$, $\lambda_q$) des Motors (2) durch Integration der differenziellen Induktanzen ($L_{diff}$) zu errechnen und die Flusskurven ($\lambda_d$, $\lambda_q$) zuzuordnen, um die magnetischen Eigenschaften des Motors (2) automatisch anzupassen;

wobei die Steuereinheit (5) dazu ausgelegt ist, das in Anspruch 1 definierte Verfahren durchzuführen.

## Revendications

1. Procédé d'adaptation automatique des caractéristiques magnétiques d'un moteur à réluctance synchrone (2), du type qui comprend un stator (3) logeant un rotor (4) dans celui-ci et définissant au moins une paire d'axes respectivement de réluctances magnétiques minimum (D) et maximum (Q), une unité de commande (5) pour commander l'alimentation électrique du moteur, dans lequel le moteur (2) a des valeurs prédéterminées de courant nominal (I) et de tension nominale (V) obtenues sur le banc et dans lequel le courant d'alimentation a des composantes ($i_d$, $i_q$) le long des axes de réluctances minimum et maximum (D, Q), lequel procédé comprend les étapes de l'application d'un nombre prédéterminé (m, n) de variations de tension et de courant (ΔV, ΔI) sur le stator avec une fréquence prédéterminée (f), la détermination d'inductances différentielles ($L_{diff}$) en réponse auxdites variations de tension et de courant (ΔV, ΔI), le calcul des courbes de flux de moteur ($\lambda_d$, $\lambda_q$) en intégrant lesdites inductances différentielles ($L_{diff}$) et en mettant en correspondance lesdites courbes de flux ($\lambda_d$, $\lambda_q$) dans ladite unité de commande (5), **caractérisé en ce qu'**il comprend les étapes suivantes :

une première étape de détection (a) de la détection de la position de moteur angulaire ($\alpha$) relativement à l'axe de réluctance minimum (D) pour établir une position stationnaire d'alignement avec ledit axe (D) ;
un première étape d'injection (b) pour l'injection, dans le stator, d'un premier nombre (m) de variations de courant ($\Delta I_d$) le long dudit axe de réluctance minimum (D) avec des premières valeurs ($I_{dmax}/m$), lesdites variations ayant des valeurs moyennes augmentant en paliers avec une premier valeur maximum ($I_{dmax}$) plus élevée que le courant nominal (I) pour fournir une saturation du stator le long dudit axe de réluctance minimum (D) tout en maintenant la composante de courant ($i_q$) le long de l'axe de réluctance maximum (Q) égale à zéro ;
une première étape de mesure (c) de la mesure de la tension ($V_d$) et du courant ($I_d$) le long de l'axe de réluctance minimum (D) avec des valeurs augmentant par paliers ($I_{dmax}/m$) pour obtenir des premières valeurs mesurées ($V_{d1}$, $I_{d1}$) pour chaque premier nombre (m) de variations de courant ($\Delta I_d$) ;
une seconde étape d'injection (d) pour l'injection d'un second nombre (n) de variations de courant ($\Delta I_q$) avec des secondes valeurs de courant prédéterminées ($I_{dmax}/n$) le long dudit axe de réluctance maximum (Q), lesdites variations ayant des valeurs moyennes augmentant en paliers avec une seconde valeur de courant maximum prédéterminée ($I_{qmax}$) plus basse que le courant nominal (I) pour maintenir le rotor (4) dans ladite position d'alignement stationnaire et la composante de courant ($i_d$) le long de l'axe de réluctance minimum (D) égale à zéro ;
une seconde étape de mesure (e) de la mesure de tension ($V_q$) et de courant ($I_q$) le long de l'axe de réluctance maximum (Q) en réponse auxdites secondes variations de courant augmentant en paliers ($\Delta I_q$) injectées dans la seconde étape d'injection (d) pour obtenir des secondes valeurs mesurées ($V_{q2}$, $I_{q2}$) ;
une étape de calcul (f) de la computation desdites première ($V_{d1}$, $I_{d1}$) et seconde ($V_{q2}$, $I_{q2}$) valeurs mesurées pour déterminer des paramètres de moteur spécifiques appropriées ($L_{d0}$, $I_{dSat}$, $L_{q0}$, $I_{qSat}$, $L_{Sat}$, $X_{Cross}$), dans lequel lesdits paramètres de moteur spécifiques ($L_{d0}$, $I_{dSat}$, $L_{q0}$, $I_{qSat}$, $L_{Sat}$, $X_{Cross}$) sont respectivement la première inductance différentielle spécifique ($L_{d0}$) le long de l'axe de réluctance minimum (D) avec la première valeur de courant idéale ($I_d$) le long de l'axe de réluctance minimum (D) égale à zéro, le courant à saturation ($I_{dSat}$) le long de l'axe de réluctance minimum (D) correspondant à la première valeur d'inductance différentielle idéale ($L_d$) le long de l'axe de réluctance minimum (D) égale à zéro, la seconde inductance différentielle spécifique ($L_{q0}$) le long de l'axe de réluctance maximum (Q) avec la seconde valeur de courant idéale ($I_q$) le long de l'axe de réluctance maximum (Q) égale à zéro, le courant à saturation ($I_{qSat}$) le long de l'axe de réluctance maximum (Q) correspondant à la seconde inductance différentielle idéale ($L_q$) le long de l'axe de réluctance maximum (Q) égale à zéro, l'inductance différentielle à saturation ($L_{Sat}$) le long des axes de réluctances minimum (D) et maximum (Q), et le facteur de saturation croisé ($X_{Cross}$) étant calculés en utilisant l'équation suivante : $X_{Cross} = (L_{q0} - L_{Sat} / L_{d0})$ ;
une étape de détermination (g) de la détermination desdites inductances différentielles ($L_{diff}$) en commençant à partir desdits paramètres de moteur spécifiques ($L_{d0}$, $I_{dSat}$, $L_{q0}$, $I_{qSat}$, $L_{Sat}$, $X_{Cross}$) selon les fonctions suivantes [1], [2], [3] et [4] indiquées ci-dessous :

$$\left\{ \begin{array}{l} Ldiff_d(i_d, 0) = -\dfrac{Ld}{Idsat} * i_d + Ld0 \\ \text{si } Ldiff_d(i_d, 0) < \text{Lsat alors } Ldiff_d(i_d, 0) = \text{Lsat} \end{array} \right\} [1]$$

$$\left\{ \begin{array}{l} \text{Ldiff}_d(i_d, i_{qmax}) = -\dfrac{Ld0}{Idsat} * \dfrac{Ld0-L\ *XCross}{Ld0} * i_d + (Ld0 - Ld0 * XCross) \\ \text{si } Ldiff_d(i_d, i_{qmax}) < \text{Lsat alors } Ldiff_d(i_d, i_{qmax}) = \text{Lsat} \end{array} \right\} [2]$$

$$\left\{ \begin{array}{l} Ldiff_q(0, i_q) = -\dfrac{Lq0}{Iqsat} * i_q + Lq0 \\ \text{si } Ldiff_q(i_q, 0) < \text{Lsat alors } Ldiff_q(i_q, 0) = \text{Lsat} \end{array} \right\} [3]$$

$$\left\{ Ldiff_q(i_{dmax}, i_q) = Lsat \right\} [4]$$

**2.** Procédé selon la revendication 1, **caractérisé en ce que** ladite première étape (a) est effectuée par l'application, sur le stator (3), d'une impulsion de courant de valeur prédéterminée égale environ au courant nominal (I) pour favoriser la rotation du rotor selon un angle prédéterminé ($\alpha$) et obtenir l'alignement du rotor (4) avec l'axe de réluctance minimum (D).

**3.** Procédé selon la revendication 1, **caractérisé en ce que** ladite première étape (a) est obtenue par identification de la position angulaire ($\alpha$) du rotor (4) relativement audit axe de réluctance minimum (D) par injection de tension ou de courant et utilisation de telle position ($\alpha$) en tant que référence pour le calcul supplémentaire le long d'axes (D, Q) en l'absence de rotation du rotor (4).

**4.** Procédé selon la revendication 1, **caractérisé en ce que** ladite première valeur de courant maximum ($I_{dmax}$) est égale à environ 150 % du courant nominal (I).

**5.** Procédé selon la revendication 1, **caractérisé en ce que** ladite seconde valeur de courant maximum ($I_{qmax}$) est égale à environ 15 % du courant nominal (I).

**6.** Procédé selon la revendication 1, **caractérisé en ce que** lesdites étapes a) à g) sont commandées par un algorithme qui est initialisé dans ladite unité de commande (5) pour computer lesdites inductances différentielles ($L_{diff}$) et mettre en correspondance lesdites courbes de flux ($\lambda$d, $\lambda$q) du moteur (2) avec une précision comparable à celle qui peut être obtenue avec des essais expérimentaux.

**7.** Appareil (1) pour adaptation automatique des caractéristiques magnétiques d'un moteur à réluctance synchrone (2), comprenant un stator (3) logeant, à l'intérieur de celui-ci, un rotor (4) et définissant au moins une paire d'axes (D, Q) de réluctances magnétiques minimum et maximum, des moyens d'alimentation pour effectuer l'alimentation électrique du moteur, dans lequel le courant nominal (I) et la tension nominale (V) sont des données d'étiquette mesurées auparavant par essai sur banc expérimental, **caractérisé en ce qu'**il comprend :

　　- un applicateur d'impulsion électrique, configuré pour fournir une rotation du rotor (4) selon un angle prédéterminé ($\alpha$) et un alignement de celui-ci avec l'axe de réluctance minimum (D) ;
　　- un injecteur électronique configuré pour appliquer, sur le stator (3), un nombre minimum prédéterminé de variations de tension et de courant ($\Delta$V, $\Delta$I) avec une fréquence prédéterminée (f) ;
　　- un dispositif de mesure de tension et de courant pour déterminer les inductances différentielles de stator ($L_{diff}$) en réponse auxdites variations de tension et de courant ($\Delta$V, $\Delta$I) avec une fréquence prédéterminée (f) ;
　　- des moyens filtres pour déterminer les inductances différentielles ($L_{diff}$) en réponse auxdites variations de tension et de courant ($\Delta$V, $\Delta$I) et en fonction du facteur de saturation croisé ($X_{Cross}$) ;
　　- une unité de commande (5) configurée pour computer les courbes de flux de moteur ($\lambda_d$, $\lambda_q$) du moteur (2) par intégration desdites inductances différentielles ($L_{diff}$) et mettre en correspondance lesdites courbes de flux ($\lambda_d$, $\lambda_q$) pour adapter automatiquement les caractéristiques magnétiques du moteur (2) ;

dans lequel ladite unité de commande (5) est configurée pour effectuer le procédé tel que défini dans la revendication 1.

*FIG. 1*

*FIG. 2*

EP 3 533 143 B1

FIG. 3

FIG. 4

13

*FIG. 5*

FIG. 6

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1354129 A
- US 20150226776 A
- EP 2555420 A
- EP 1641114 A
- EP 2453248 A
- US 7825620 B